Europäisches Patentamt

European Patent Office

Office européen des brevets

(19)

(11) Numéro de publication: **0 221 619**
**A1**

(12) **DEMANDE DE BREVET EUROPEEN**

(21) Numéro de dépôt: 86201936.1

(22) Date de dépôt: 06.11.86

(51) Int. Cl.⁴: **G01S 7/52** , G01S 15/02 , **G10K 11/34**

(30) Priorité: 08.11.85 FR 8516561

(43) Date de publication de la demande:
13.05.87 Bulletin 87/20

(84) Etats contractants désignés:
DE FR GB

(71) Demandeur: **Laboratoires d'Electronique et de Physique Appliquée L.E.P.**
**3, Avenue Descartes**
**F-94450 Limeil-Brévannes(FR) FR**
Demandeur: **N.V. Philips' Gloeilampenfabrieken**
**Groenewoudseweg 1**
**NL-5621 BA Eindhoven(NL) DEGB**

(72) Inventeur: **Coursant, Roger Henri Société Civile S.P.I.D.**
**209 Rue de l'Université**
**F-75007 Paris(FR)**
Inventeur: **Gauchet, Maurice Société Civile S.P.I.D.**
**209 Rue de l'Université**
**F-75007 Paris(FR)**
Inventeur: **Nectoux, Raymond Société Civile S.P.I.D.**
**209 Rue de l'Université**
**F-75007 Paris(FR)**

(74) Mandataire: **Landousy, Christian et al**
**Société Civile S.P.I.D. 209, Rue de l'Université**
**F-75007 Paris(FR)**

(54) Appareil d'examen de milieux par échographie ultrasonore à deux fréquences de fonctionnement.

(57) Appareil d'exploration de milieux par échographie ultrasonore comprenant au moins un transducteur ultrasonore (10) de type électrostrictif associé à un étage de polarisation (60), à un étage (20) d'émission répétée de signaux ultrasonores vers le milieu à explorer, à un étage (40) de réception et de traitement des échos et à un circuit d'aiguillage (50) destiné à relier au transducteur, au rythme des durées d'émission et de réception soit l'étage d'émission (20) soit l'étage de réception et de traitement (40). Cet appareil est remarquable en ce que l'étage de polarisation (60) comprend un commutateur commandable (61), reliant au transducteur soit une source de tension de polarisation (62) soit la masse pendant les périodes d'émission, et en ce que l'étage d'émission (20) comprend un réseau d'éléments R, L pour l'adaptation des signaux d'excitation à ces différentes conditions de polarisation.

Application : échographes pour examens en acoustique non linéaire.

**FIG.1**

## APPAREIL D'EXAMEN DE MILIEUX PAR ECHOGRAPHIE ULTRASONORE A DEUX FREQUENCES DE FONTIONNEMENT

La présente invention concerne un appareil d'exploration de milieux par échographie ultrasonore comprenant au moins un transducteur ultrasonore de type électrostrictif associé à un étage de polarisation, ainsi qu'à un étage d'émission répétée de signaux ultrasonores vers le milieu à explorer, à un étage de réception et de traitement des échos renvoyés vers le transducteur par les obstacles rencontrés dans le milieu exploré, et à un circuit d'aiguillage destiné à relier au transducteur soit l'étage d'émission soit l'étage de réception et de traitement.

Un tel appareil est utilisable notamment dans le domaine médical, pour l'exploration de tissus biologiques et la détermination de paramètres caractéristiques des milieux explorés, et plus particulièrement, dans le cas présent, pour la détermination du coefficient B/A de non-linéarité acoustique de ces milieux.

La demande de brevet européan EP-A-0091768 décrit un procédé et un appareil d'exploration de milieux par échographie ultrasonore dans lesquels il est prévu, entre autres dispositions, de faire appel à un transducteur large bande pour permettre la réception de signaux échographiques dans différentes bandes de fréquence. Pour posséder une telle caractéristique, le transducteur est en fait réalisé sous la forme d'un transducteur composite comprenant au moins un premier et un deuxième transducteur, ou de façon équivalente différentes couches de matériau piézoélectrique de fréquences de travail différentes, pour recevoir dans ces différentes bandes.

Le but de l'invention est de proposer une solution de type nouveau pour recevoir, avec un même et unique transducteur, à deux fréquences distantes d'une octave environ.

L'appareil selon l'invention est à cet effet caractérisé en ce que l'étage de polarisation comprend un commutateur commandable, destiné à relier au transducteur soit une source de tension de polarisation soit la masse pendant les périodes d'émission, pour recueillir pendant les périodes de réception des signaux échographiques respectivement à une fréquence d'émission prédéterminée ou à une fréquence double de celle-ci, et en ce que l'étage d'émission comprend un réseau d'éléments R, L pour l'adaptation des signaux d'excitation à ces différentes conditions de polarisation du transducteur.

Les avantages d'un échographe possédant une telle structure sont liés à la possibilité d'examiner successivement un même milieu au moyen de champs ultrasonores en faisant appel à deux fréquences de travail très nettement différentes. La succession des examens peut être très brève, de l'ordre d'une milliseconde par example, puisque l'on ne change pas de transducteur mais que l'on modifie seulement l'état vibratoire du transducteur. Une telle possibilité d'examen peut être exploitée, en échographie ultrasonore, pour le contrôle non destructif de matériaux ou, comme on l'a vu, dans le domaine médical pour une aide au diagnostic. On a cité en particulier l'intérêt de la présente invention dans les dispositifs d'imagerie exploitant le coefficient B/A des milieux explorés en acoustique non linéaire.

Les particularités et avantages de l'invention apparaîtront maintenant de façon plus précise dans la description qui suit et dans les dessins annexés, donnés à titre d'exemples non limitatifs et dans lesquels :

-la figure 1 montre un exemple de réalisation d'un appareil conforme à l'invention ;

-la figure 2 montre l'allure de la caractéristique entrée-sortie d'un transducteur ultrasonore réalisé en un matériau électrostrictif avec polarisation non rémanente ;

-la figure 3 montre le schéma électrique équivalent de l'ensemble des éléments de circuit présents entre le générateur de signaux électriques d'excitation et le transducteur ultrasonore ;

-les figures 4 et 5 sont des diagrammes de temps montrant l'allure des principaux signaux observés au cours du fonctionnement de l'appareil conforme à l'invention ;

-la figure 6 montre un exemple particulier de réalisation du circuit de commande temporelle de l'appareil.

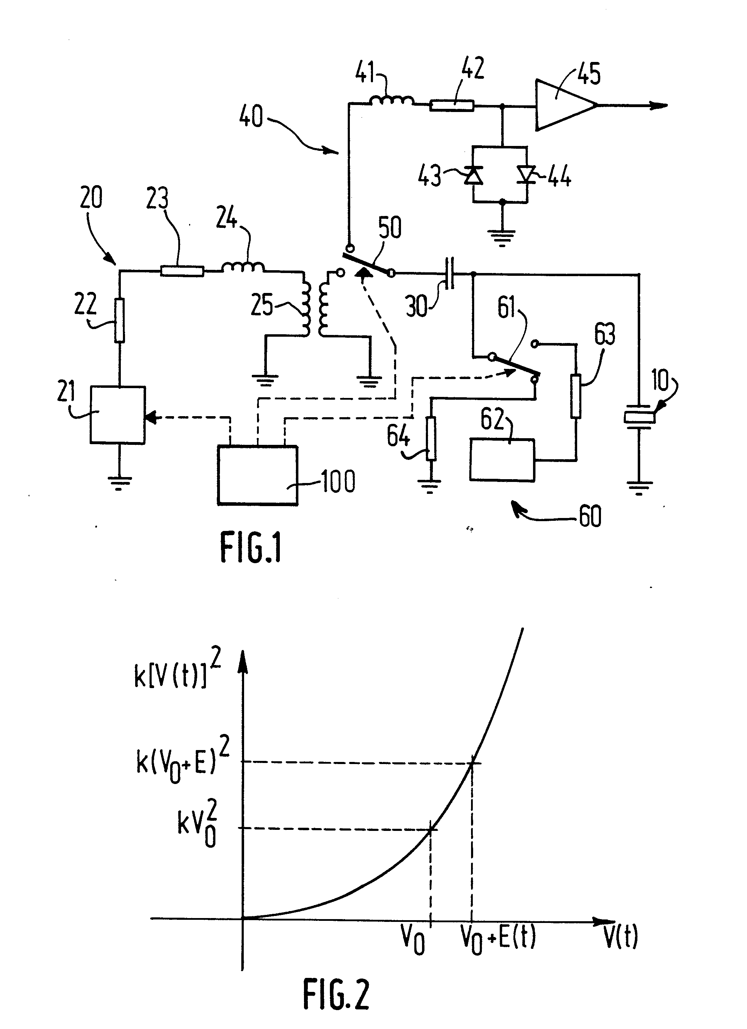

Dans le mode de réalisation préférentiel proposé sur la figure 1, l'appareil selon l'invention comprend un transducteur ultrasonore 10 de type électrostrictif, un étage 20 d'émission répétée de signaux ultrasonores du transducteur vers le milieu à explorer, et un étage 40 de réception et de traitement des échos renvoyés vers le transducteur et correspondant aux obstacles rencontrés dans leur direction de propagation par les signaux émis.

L'étage 20 d'émission comprend un générateur 21 des signaux électriques d'excitation du transducteur, émis à une fréquence de travail $f_o$ avec une cadence de répétition correspondant à une fréquence f. Ce générateur 21, de résistance de sortie 22, est suivi d'une résistance 23, d'une inductance 24, et d'un transformateur d'impulsions 25 réalisé par exemple par enroulements sur un tore de ferrite. En sortie du transformateur d'impulsions 25 est prévu après un circuit d'aiguillage 50 un condensateur de séparation 30, puis le transducteur 10 et, en parallèle sur celui-ci, son étage de polarisation 60.

Le circuit d'aiguillage 50 permet de relier au transducteur, par l'intermédiaire du condensateur 30, soit l'étage d'émission 20, soit l'étage de réception et de trai tement 40. L'étage 40 comprend une inductance 41, une résistance 42, des diodes de protection 43 et 44 pour l'absorption des transitoires de commutations, un préamplificateur 45, et des circuits, non représentés, de traitement et/ou de visualisation tels que détecteur d'enveloppe (assurant un redressement et un filtrage basse fréquence), amplificateur avec compensation de gain en profondeur, éventuellement circuit de compression logarithmique, etc... Ces circuits de type classique n'ont pas été représentés par souci de simplification de la figure.

Le fonctionnement de l'appareil selon l'invention sera maintenant décrit, avec une étude théorique préalable qui permet de mieux comprendre ce fonctionnement.

La couche excitable d'un transducteur ultrasonore comprend bien entendu deux faces, et toute excitation électrique de ce transducteur transmise par l'intermédiaire des électrodes recouvrant lesdites faces génère au total quatre ondes ultrasonores, à savoir une onde avant et une onde arrière pour chacune des deux faces. Les signaux ultrasonores ainsi engendrés sont proportionnels au carré de la tension appliquée V(t) dans le cas d'un matériau électrostrictif, c'est-à-dire à polarisation non rémanente. Ces signaux vont être analysés dans deux situations distinctes : présence de la polarisation du matériau, absence de cette polarisation.

Lorsque le matériau électrostrictif est polarisé, la tension V(t) appliquée au transducteur est la somme d'une tension continue $V_o$ de valeur élevée et d'un signal alternatif E(t) d'amplitude faible. La figure 2 montre l'allure du signal ultrasonore engendré, proportionnel à V(t)² selon un coefficient k, en fonction de la tension électrique globale V(t) appliquée. On peut linéariser l'expression de V(t)² :

$$V(t)^2 = V_o^2 + 2 V_o \bullet E(t) + E(t)^2 \quad (1)$$

Dans l'expression (1), le terme E(t)² est négligeable, et les forces exercées sur le matériau électrostrictif peuvent alors être considérées comme la somme d'une force proportionnelle à $V_o^2$ et constante dans le temps et d'une force modulante non constante, proportionnelle à $2V_o \bullet E(t)$ c'est-à-dire à E(t). Une exploitation du transducteur en mode linéaire est donc obtenue si l'on travaille avec une plage d'excursion faible autour de la tension de polarisation V. Pour un signal E(t) de la forme :

$$E(t) = K \bullet \sin \omega_o t \bullet e^{-2\alpha t^2} \quad (2)$$

c'est-à-dire pour un signal gaussien ou pseudo-gaussien (le coefficient $\alpha$ étant lié à la caractéristique de dispersion de la gaussienne ou de la pseudo-gaussienne), cette expression contient donc un terme principal qui est centré sur une pulsation $\omega_o$ (c'est-à-dire une fréquence $f_o$).

Si au contraire le matériau électrostricitif n'est pas polarisé, l'expression (1) montre que V(t)² est cette fois proportionnel à E(t)² puisque la tension continue $V_o$ est nulle. Pour un signal E(t) ayant la même forme que précédemment, V(t)² est donc proportionnel à $K^2 \sin^2 \omega_o t \, e^{-2\alpha t^2}$ ou encore, en développant cette dernière expression, à une nouvelle expression de la forme $\frac{K^2}{2} e^{-2\alpha t^2} - \frac{K^2}{2} e^{-2\alpha t^2} \bullet \cos 2\omega_o t$ dans laquelle le premier terme ne joue que le rôle d'une pseudoconstante. Le terme principal est donc le second, qui représente la partie alternative et dynamique du signal ultrasonore engendré. On peut admettre que ce second terme est peu perturbé par le premier. En effet, en raison de l'étendue de la bande passante du transducteur qui, conformément à l'invention, doit inclure les fréquences $f_o$ et $2f_o$ mais ne laisse pas passer les fréquences contenues dans le spectre du signal basse fréquence constitué par la pseudoconstante $\frac{K^2}{2} e^{-2\alpha t^2}$, la fréquence significative la plus élevée du spectre de ce signal n'est généralement pas contenue dans la bande passante, par exemple à -20 dB, du transducteur.

Des calculs menés ci-dessus il résulte qu'un transducteur électrostrictif fonctionnant successivement en mode émetteur polarisé et en mode émetteur non polarisé recevra en retour, lorsqu'il passe en mode récepteur, un champ ultrasonore à la fréquence $f_o = \omega_o/2\pi$ dans le premier cas (présence de la polarisation en mode émetteur) et à la fréquence $2f_o = \omega_o/\pi$ dans le deuxième cas (absence de la polarisation en mode émetteur).

Il est bien entendu nécessaire, pour observer ces deux possibilités de réception, que le transducteur possède une bande passante d'au moins une octave, incluant les fréquences $f_o$ et $2\,f_o$, ou bien que le matériau choisi soit caractérisé à ces deux fréquences par l'existence de deux états vibratoires résonnants. Un exemple de structure large bande est donné par exemple dans la demande de brevet français N° 84 07 957 (PHF 84-538) déposée par la demanderesse. Un exemple de structure à deux états vibratoires résonnants situés à une octave l'un de l'autre est donné dans une autre demande de brevet français N° 85 15 849 (PHF 85-578) également déposée par la demanderesse.

Ces deux possibilités de fonctionnement avec et sans polarisation du matériau électrostrictif du transducteur ultrasonore sont permises, dans le cas du mode de réalisation préférentiellement décrit sur la figure 1, grâce à la constitution particulière de l'étage de polarisation 60. L'étage 60 comprend en effet un commutateur 61 pouvant être relié, sur commande, soit à une source de tension de polarisation 62 par l'intermédiaire d'une résistance 63, soit à la masse par l'intermédiaire d'une résistance 64. La résistance 63 est une résistance de protection qui, en limitant le courant que la source de tension de polarisation 62 peut débiter en mode d'émission polarisé, évite également le court-circuit, par l'intermédiaire de cette source 62, des signaux d'excitation présentés aux bornes du transducteur 10. La résistance 64 permet, en mode d'émission non polarisé, la décharge du condensateur de séparation 30 et du condensateur constitué par le transducteur 10. Le condensateur de séparation 30 évite à la haute tension délivrée par l'étage de polarisation 60 d'être atténuée par l'effet de court-circuit créé par la faible impédance au niveau du secondaire du transformateur d'impulsions.

Les deux résistances 63 et 64 ont ici une même valeur ohmique $R_G$, qui doit être grande devant l'impédance $1/C_o\omega_o$ du transducteur 10, $\omega_o$ étant donc la pulsation du signal d'excitation et $C_o$ la capacité du transducteur. On admettra par exemple que $R_G$ a une valeur voisine de $100/C_o\omega_o$, tout en n'étant pas trop élevée pour ne pas gêner l'exploitation du transducteur. En effet, si $C_S$ est la capacité du condensateur de séparation 30 (valeur qui doit être élevée et par exemple égale à $100\,C_o$ pour ne pas perturber non plus le fonctionnement du transducteur), la constante de temps de charge du circuit $R_G$, $C_o$, $C_S$ est donnée par l'expression $R_G \bullet C_o \bullet C_S/(C_o + C_S)$ sensiblement égale à $R_G \bullet C_o$ dans le cas où $C_S = 100\,C_o \bullet$ D'où l'intérêt de limiter cette valeur de $R_G \bullet$

Cette adaptation des éléments des circuits en vue d'un fonctionnement correct du transducteur 10 se retrouve également dans le choix de la résistance 23, de l'inductance 24 et du transformateur d'impulsions 25 de l'étage 20 d'émission. Ces éléments permettent en effet une adaptation électrique et une mise en forme du spectre de l'excitation électrique par rapport au spectre de transfert intrinsèque du transducteur.

Le composant vu par le secondaire du transformateur d'impulsions 25 est essentiellement le condensateur de capacité $C_o$ du transducteur 10. Cette capacité $C_o$ est ramenée au primaire dudit transformateur en étant divisée par le carré du rapport $n_1/n_2$ de transformation du transformateur. Si l'on note $C_V = C_o \cdot (n_2/n_1)^2$ cette capacité ramenée, la valeur $L_A$ de l'inductance 24 doit être choisie de façon à être accordée sur $C_V$, ce qui implique :

$$\omega_o = \frac{1}{\sqrt{L_A \cdot C_V}} \qquad\qquad (3)$$

D'où la valeur souhaitable pour $L_A$ :

$$L_A = \frac{1}{C_V \cdot \omega_o^2} \qquad\qquad (4)$$

Le réseau d'éléments constitué par la résistance de sortie 22 du générateur de signaux électriques 21 et par les éléments 23 à 25 sert aussi à ajuster le spectre de l'excitation électrique, centré sur $\omega_o$, de façon à obtenir aux bornes du transducteur 10 un spectre qui s'inscrive bien à l'intérieur du spectre de transfert intrinsèque du transducteur, c'est-à-dire qui ne sorte des limites de celui-ci ni du côté inférieur des fréquences, ni du côté supérieur, à l'émission comme à la réception. Cet ajustement de spectre, destiné à garantir que les spectres de $V(t)$ et de $V(t)^2$ centrés sur des fréquences, ou pulsations, doubles l'une de l'autre ne débordent ni l'un ni l'autre du spectre de transfert intrinsèque du transducteur, est lié directement,

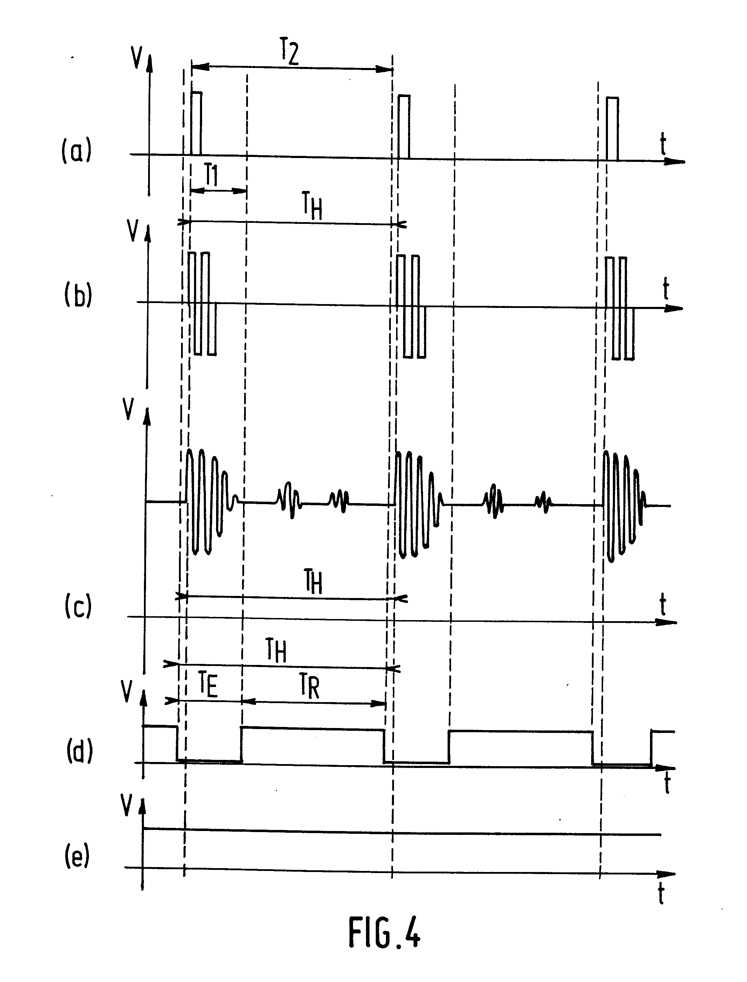

$L_A$ étant fixée, à la valeur ohmique des éléments résistifs de l'étage 20 d'émission. En effet, soit $R_T = R_S + R_A$ où $R_S$ et $R_A$ sont les valeurs ohmiques respectivement de la résistance de sortie 22 du générateur 21 et de la résistance 23. Comme le montre la figure 3, le réseau d'éléments 22 à 25 est équivalent à un réseau RLC série dont la tension de sortie est prélevée aux bornes de C, de capacité $C_V$, et dont la fonction de transfert est donée par :

$$\frac{U_S(j\omega)}{U_E(j\omega)} = \frac{\dfrac{1}{jC_V\omega}}{R_T + jL_A\omega + \dfrac{1}{jC_V\omega}} \qquad (5)$$

Elevée au carré, le module de cette expression devient :

$$\left|\frac{U_S(j\omega)}{U_E(j\omega)}\right|^2 = \frac{1}{C_V^2\omega^2\left[R_T^2 + (L_A\omega - \dfrac{1}{C_V\omega})^2\right]} \qquad (6)$$

Si $\omega = \omega_0 + \Delta\omega$, $\Delta\omega$ étant faible devant $\omega_0$ on a l'égalité suivante :

$$\frac{1}{C\omega} = \frac{1}{C\omega_0(1 + \Delta\omega/\omega_0)} \simeq \frac{1}{C\omega_0}(1 - \frac{\Delta\omega}{\omega_0})$$

On a par ailleurs :

$$L_A\omega - \frac{1}{C_V\omega} \simeq L_A(\omega_0 + \Delta\omega) - \frac{1}{C_V\omega_0}(1 - \frac{\Delta\omega}{\omega_0})$$

$$L_A\omega - \frac{1}{C_V\omega} \simeq L_A\omega_0 - \frac{1}{C_V\omega_0} + \Delta\omega(L_A + \frac{1}{C_V\omega_0^2})$$

Pour $\omega_0 = \omega_0$ $L_A\omega_0 = 1/C_V\omega_0$ et $L_A = 1/C_V\omega_0^2$. Il vient donc :

$$L_A\omega - \frac{1}{C_V\omega} \simeq 2L_A \cdot \Delta\omega \qquad (7)$$

D'où :

$$\left| \frac{U_S(j\omega)}{U_E(j\omega)} \right|^2 \simeq \frac{1}{C_V^2 \, \omega^2 \, (R_T^2 + 4 \, L_A^2 \cdot \Delta\omega^2)}$$

L'accroissement du terme $R_T^2 + 4L_A^2 \cdot \Delta\omega^2$ relatif à une variation de $+ 6dB$ de l'expression globale, ou bien entendu à une variation de $+3$ dB de $|U_S(j\omega)/ U_E(j\omega)|$, correspond à une valeur de $\Delta\omega$ telle que l'on ait : $R_T^2 + 4 L_A^2 \cdot \Delta\omega^2 = 2 R_T^2$ ($R_T^2$ étant la valeur minimale pour $\Delta\omega = 0$, le terme prend une valeur double aux limites à 3 dB). On a donc : $(2 \Delta\omega)^2 = R_T^2 / L_A^2$ et $2\Delta\omega = R_T/L_A$. On sait par ailleurs que le coefficient de qualité Q du circuit est exprimé par la relation :

$$Q = \frac{\omega_o}{2 \, \Delta\omega}$$

D'où l'égalité (en remplaçant $2 \Delta\omega$ par $R_T/L_A$ :

$$Q = \frac{L_A \, \omega_o}{R_T}$$

La largeur à -3dB du spectre de transfert du réseau d'éléments 22 à 25 (résistance $R_T = R_S + R_A$, inductance $L_A$ capacité remenée $C_V$) est donc donnée en approximation par l'expression :

$$\frac{2 \, \Delta\omega}{\omega_o} = \frac{1}{Q} = \frac{R_T}{L_A \omega_o} \qquad (8)$$

qui devient : $2 \Delta\omega = R_T/L_A$. De même, la largeur à -6dB serait donnée par :

$$R_T^2 + 4 \, L_A^2 \cdot \Delta\omega^2 = 4 \, R_T^2$$

$$(2 \Delta\omega)^2 = 3 \, R_T^2/L_A^2$$

$$2 \, \Delta\omega = R_T\sqrt{3}/L_A$$

$$\frac{2 \, \Delta\omega}{\omega_o} = \frac{R_T \sqrt{3}}{L_A \omega_o} \qquad (9)$$

qui devient : $2\Delta\omega = R_T \sqrt{3}/L_A$. C'est en jouant sur la résistance d'accord $R_T = R_S + R_A$ que l'on obtient, ou non, que le spectre de V(t) ou de V(t)² ne déborde pas du spectre de transfert intrinsèque du transducteur.

Si l'on considère par exemple $f_{om}$, une fréquence de coupure basse du spectre du transducteur, l'expression ($\Delta$ f)-3dB du spectre de V(t) doit être inférieure ou égale à :

$(f_{om})$-6dB -$(f_{om})$-9dB du spectre du transducteur.

La limite est donc :

$\Delta f_{(-3dB)} = (f_{om})$-6dB $-(f_{om})$-9dB $= \Delta f_{(lim)}$.

On a d'autre part :

$2 \Delta\omega = R_T/L_A$

d'où $R_T = L_A 2 \Delta\omega = 4\pi \bullet L_A \bullet \Delta f_{(lim)}$

Si l'on considère maintenant $f_{OM}$, une fréquence de coupure haute du spectre du transducteur, c'est l'expression $(\Delta f)$-3dB du spectre de V(t)$^2$ qui doit être inférieure ou égale à :

$(f_{OM})$-6dB -$(f_{OM})$-9dB du spectre du transducteur.

La limite est donc :

$\Delta f_{(-3dB)} = (f_{OM})$-6dB $-(f_{OM})$-9dB

Au niveau de V(t), on a : $\Delta f_{(-3dB)} \simeq \sqrt{2} \bullet \Delta f_{(lim)}$

d'où $R_T = 4\pi \bullet L_A \bullet \sqrt{2} \bullet \Delta f_{(lim)}$

On peut, aussi, être moins exigeant en ce qui concerne ces fréquences de coupure basse et haute du spectre du transducteur, et admettre alors des valeurs de $\Delta f_{(lim)}$ plus importantes, ce qui revient à considérer des valeurs de $R_T$ plus élévées, donnant au transducteur des réponses plus brèves. Par ailleurs, l'ajustement de cette valeur de $R_T$ peut de toute façon être rendu moins rigoureux si l'on modifie la largeur du spectre du signal d'entrée du réseau d'éléments 22 à 25 par modification du nombre d'impulsions du signal d'excitation (qui comprend par exemple de 1 à 5 impulsions bipolaires de pseudo-fréquence $f_o$).

De la partie de description qui précède, il résulte donc clairement que l'appareil proposé permet de fonctionner selon deux modes qu'on nommera par simplification :

-mode $f_o$ : il y a polarisation en mode émetteur et en mode récepteur ;

-mode $2_o$ : il y a toujours polarisation en mode récepteur, mais absence de polarisation en mode émetteur, après la fin duquel il va donc falloir appliquer la polarisation nécessaire pour le passage en mode récepteur.

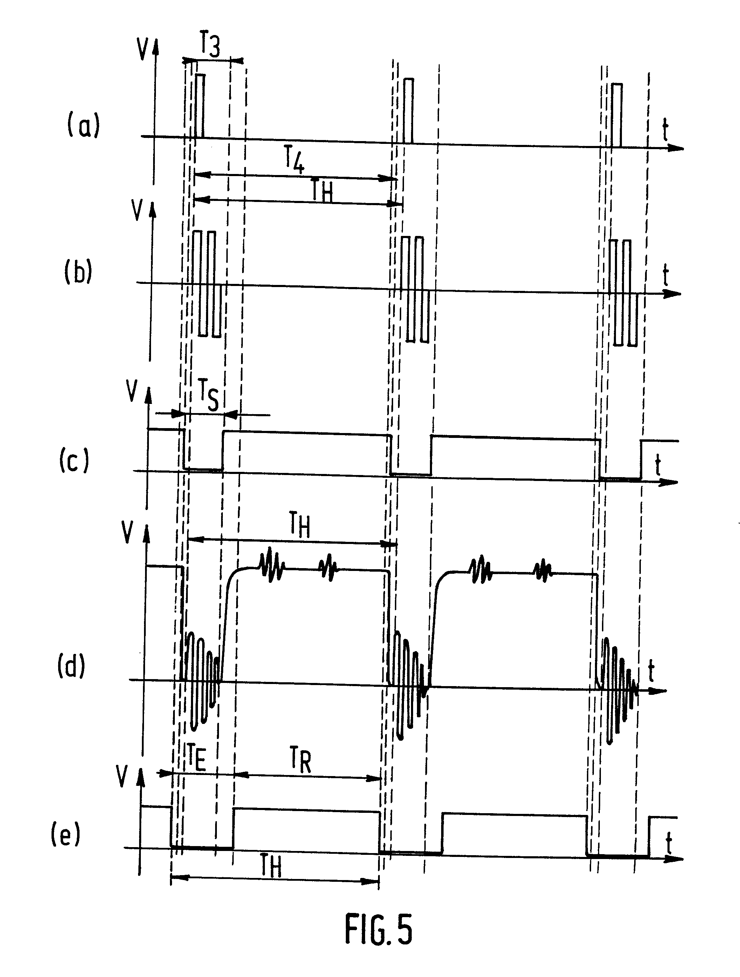

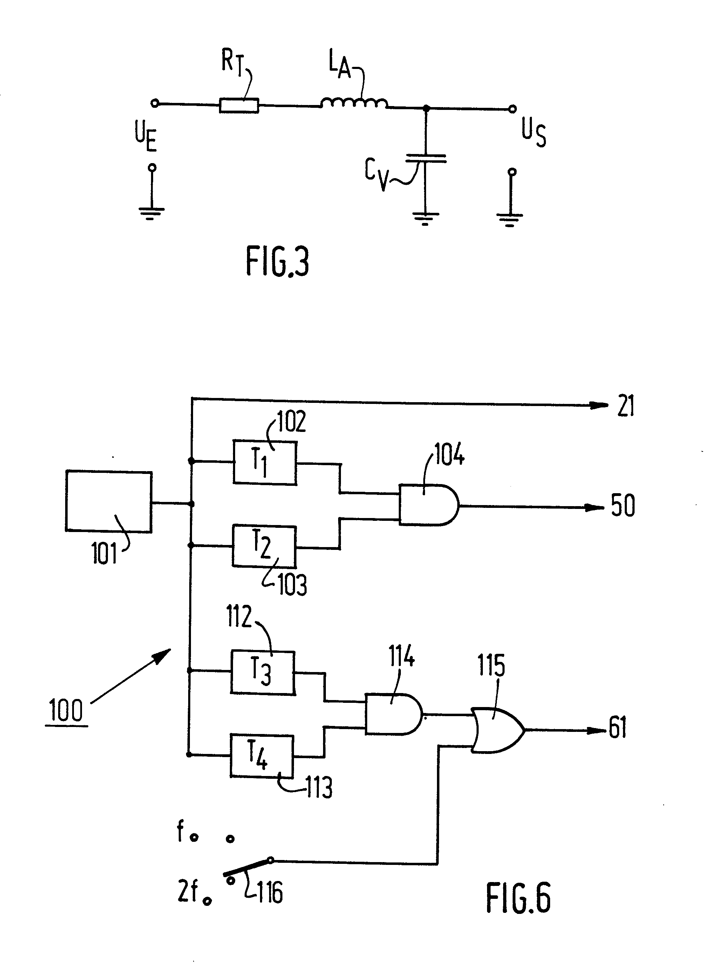

La succession de ces différents modes, à savoir mode émetteur, mode récepteur, mode $f_o$ et mode $2f_o$, est maintenant décrite ci-dessous en référence aux diagrammes de temps de la figure 4 pour le mode $f_o$ aux diagrammes de temps de la figure 5 pour le mode $2f_o$. Cette succession est organisée sous le contrôle général d'un circuit de commande temporelle 100 dont les éléments constitutifs sont précisés plus loin, en référence à la figure 6.

La figure 4a montre les signaux d'horloge définissant la cadence des cycles d'émission-réception, c'est-à-dire la fréquence de récurrence des trains d'impulsions délivrés par le générateur 21 des signaux électriques d'excitation et dont l'allure est représentée sur la figure 4b. Soit $f_H$ cette fréquence, et donc $T_H$ la période de récurrence de ces signaux d'horloge. Cette période $T_H$ se retrouve également sur la figure 4c qui montre l'allure des signaux électriques réellement disponibles aux bornes du transducteur pour des signaux d'excitation impulsionnels tels que ceux de la figure 4b. Ces signaux aux bornes du transducteur sont composés d'une composante continue correspondant à la polarisation et de signaux alternatifs d'excitation superposés à cette composante continue. En mode émission, le circuit d'aiguillage 50 est en position appelée basse sur la figure 1, pendant une durée $T_E$ suffisamment longue pour encadrer le signal d'horloge (figure 4a), le signal d'excitation (figure 4b) et le signal aux bornes du transducteur (figure 4c). Le mode $f_o$ correspondant, on l'a vu, à un mode émetteur avec polarisation, le commutateur 61 est alors en position appelée haute sur la figure 1, c'est-à-dire assure la liaison de la source de tension de polarisation 62 avec le transducteur. Des signaux logiques de commande de ces positions du circuit d'aiguillage 50 et du commutateur 61 sont représentés respectivement sur les figures 4d et 4e. Sur la figure 4d, $T_R = T_H$ -$T_E$ désigne la durée du mode récepteur complémentaire de celle du mode émetteur par rapport à la durée globale $T_H$. Sur la figure 4e, il apparaît clairement qu'en mode $f_o$ la polarisation est maintenue en permanence, aussi bien en mode émetteur qu'en mode récepteur.

La figure 5a montre, comme la figure 4a, les signaux d'horloge de fréquence $f_H$. De même, la figure 5b montre l'allure des trains d'impulsions de pseudo-fréquence $f_o$ émis à fréquence de récurrence $f_H$ par le générateur 21 des signaux électriques d'excitation. Mais, en mode $2f_o$, on a vu que la polarisation était supprimée à l'émission. Cette suppression est opérée par basculement du commutateur 61 qui vient en position basse et supprime ainsi la liaison de la source 62 avec le transducteur. La figure 5c montre un signal logique de commande de la position du commutateur 61, signal qui est au niveau zéro pendant la durée $T_S$ de fonctionnement en mode $2f_o$ et au niveau 1 le reste du temps. La figure 5d montre en conséquence l'allure des signaux électriques disponibles aux bornes du transducteur, allure tout à fait comparable à celle observée sur la figure 4c à cette exception près que la haute tension de polarisation est absente pendant la durée $T_S$ des trains d'impulsions émis. La figure 5e, identique à la figure 4d, fait apparaître les durées $T_E$ et $T_R$ des modes émetteur et récepteur pendant les cycles complets d'émission-réception de durées globales $T_H$. Bien entendu, la position temporelle relative des signaux des figures 5c à 5d est telle que la durée $T_S$ (figures 5c et 5d) est entièrement comprise dans la durée $T_E$ (figure 5e) : on ne supprime la polarisation, en mode $2f_0$, qu'à l'intérieur des périodes correspondant à un fonctionnement en mode émetteur.

Le circuit de commande temporelle 100 est de type classique pour la commande de déclenchement du générateur 21 des signaux électriques d'excitation. Il comprend notamment, à cet effet, un circuit d'horloge 101, qui délivre les signaux d'horloge de fréquence $f_H$ représentés sur les figures 4a et 5a, et un circuit de basculement. Les signaux d'horloge, délivrés par le circuit 101, d'une part commandent périodiquement le déclenchement du générateur 21 des signaux électriques d'excitation et d'autre part sont envoyés vers le circuit de basculement. Ce circuit de basculement comprend des bascules monostables 102 et 103 commandées par lesdits signaux d'horloge et dont les sorties, directe pour la bascule 103 et inversée pour la bascule 102, sont reliées aux entrées d'une porte ET 104. Lorsque la sortie de cette porte ET 104 est 0, le circuit d'aiguillage 50 est en position basse et l'appareil fonctionne en mode émetteur, et réciproquement, lorsque cette sortie est 1, le circuit 50 est en position haute et l'appareil fonctionne en mode récepteur. La bascule 102 a donc défini une durée $T_1$ après laquelle l'appareil passe en mode récepteur, et la bascule 103 une durée $T_2$ après laquelle il repasse en mode émetteur, et ainsi de suite au rythme des signaux d'horloge se succédant à la fréquence de récurrence $f_H$.

Le circuit de basculement comprend également des moyens de commande des changements de position du commutateur 61, composés par exemple de bascules monostables 112 et 113, d'une porte ET 114, d'une porte OU 115 et d'un sélecteur de mode 116. Les bascules monostables 112 et 113 sont commandées par les signaux d'horloge délivrés par le circuit 101 et leurs sorties, directe pour la bascule 113 et inversée pour la bascule 112, sont reliées aux entrées de la porte ET 114. La porte OU 115 reçoit d'une part la sortie de la porte ET 114, qui est à tout instant identique à celle de la porte ET 104, et d'autre part la sortie du sélecteur de mode qui, dans le cas présent, commande automatiquement la succession des examens aux fréquence respectives $f_0$ et $2f_0$. Lorsqu'on est en mode récepteur, la sortie des portes ET 104 et 114 est 1, et celle de la porte OU 115 également, la polarisation du transducteur 10 étant alors présente. Lorsqu'on est en mode émetteur, la sortie des portes ET 104 et 114 est 0, et celle de la porte OU 115 est 0 ou 1 selon le niveau 0 ou 1 présent sur l'entrée de cette porte 115 qui est reliée au sélecteur de mode, c'est-à-dire selon qu'on est en mode $f_0$ (transducteur polarisé) ou en mode $2 f_0$ (transducteur non polarisé). La bascule 112 a donc défini une durée $T_3$ à la fin de laquelle, si l'on se trouve en mode $2 f_0$, l'appareil passe en mode "transducteur polarisé", et la bascule 113 a défini une durée $T_4$ à la fin de laquelle, si l'on se trouve en mode $2 f_0$, l'appareil repasse en mode "transducteur non polarisé".

## Revendications

1. Appareil d'exploration de milieux par échographie ultrasonore comprenant au moins un transducteur ultrasonore (10) de type électrostrictif associé à un étage de polarisation (60), ainsi qu'à un étage (20) d'émission répétée de signaux ultrasonores vers le milieu à explorer, à un étage (40) de réception et de traitement des échos renvoyés vers le transducteur par les obstacles rencontrés dans le milieu exploré, et à un circuit d'aiguillage (50) destiné à relier au transducteur soit l'étage d'émission (20) soit l'étage de réception et de traitement (40), caractérisé en ce que l'étage de polarisation (60) comprend un commutateur commandable (61), destiné à relier au transducteur soit une source de tension de polarisation (62) soit la masse pendant les périodes d'émission, pour recueillir pendant les périodes de réception des signaux échographiques respectivement à une fréquence d'émission prédéterminée ou à une fréquence double de celle-ci, et en ce que l'étage d'émission (20) comprend un réseau d'éléments R, L pour l'adaption des signaux d'excitation à ces différentes conditions de polarisation du transducteur.

2. Appareil selon la revendication 1, caractérisé en ce qu'il comprend des moyens de commande du commutateur commandable (61), ces moyens comprenant une première et une deuxième bascule monostable (112) et (113) définissant respectivement les instants de suppression et d'établissement de la polarisation à l'aide d'une porte ET (114) recevant la sortie directe de la deuxième bascule et la sortie inversée de la première, ainsi qu'une porte OU (115) de déclenchement effectif de la suppression ou de l'établissement de la polarisation selon le niveau de sortie de la porte ET (114) et l'état d'un sélecteur (116) de mode de fonctionnement à la fréquence d'émission ou à la fréquence double de celle-ci.

**FIG.1**

**FIG.2**

FIG.4

FIG.5

**FIG.3**

**FIG.6**

# RAPPORT DE RECHERCHE EUROPEENNE

Office européen des brevets

Numero de la demande

EP 86 20 1936

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int Cl.4) |
|---|---|---|---|
| A | US-A-3 523 275 (GROSS) <br> * Résumé; colonne 2, ligne 60 - colonne 3, ligne 44; colonne 5, ligne 3 - colonne 6, dernière ligne * | 1 | G 01 S 7/52 <br> G 01 S 15/02 <br> G 10 K 11/34 |
| | --- | | |
| A | US-A-4 096 756 (ALPHONSE) <br> * Résumé; colonne 2, lignes 24-47; colonne 3, ligne 10 - colonne 4, ligne 59; colonne 6, ligne 1 - colonne 12, ligne 23 * | 1 | |
| | --- | | |
| P,X | EP-A-0 190 805 (LEP & PHILIPS) <br> * Résumé; page 2, ligne 5 - page 5, ligne 29; revendication 1 * | 1,2 | |
| | ----- | | |

DOMAINES TECHNIQUES RECHERCHES (Int. Cl.4)

G 01 S
G 10 K
H 04 R
B 06 B

Le présent rapport de recherche a été établi pour toutes les revendications

| Lieu de la recherche | Date d'achèvement de la recherche | Examinateur |
|---|---|---|
| LA HAYE | 16-01-1987 | OLDROYD D.L. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet anterieur. mais publié à la date de dépôt ou après cette date
D : cité dans la demande
L : cité pour d'autres raisons

& : membre de la même famille. document correspondant

OEB Form 1503 03 82